# EUROPEAN PATENT APPLICATION

(11) **EP 4 606 684 A1**
(43) Date of publication of application: **27.08.2025**
(21) Application number: 24159104.9
(22) Date of filing: 22.02.2024
(51) Int. Cl.: B62D 59/04

(54) **CONTROL ARRANGEMENT AND METHOD FOR CONTROLLING DISTRIBUTION OF FORCE PROVIDED TO A VEHICLE BY A PLURALITY OF POWER UNITS**

(71) Applicant: Scania CV AB, 151 87 Södertälje (SE)
(72) Inventor: STÅHL, Daniel, 749 48 Enköping (SE); VESTGÖTE, Karl, 611 63 Nyköping (SE); BERGLUND, Martin, 619 73 Vagnhärad (SE); CARLGREN, Magnus, 619 94 Vagnhärad (SE)
(74) Representative: Scania CV AB

(57) **Abstract**

Control arrangement (100) and method for controlling distribution of force provided to a vehicle (1) by a plurality of power units (11, 12, 14, 22, 32) to meet a total force demand. The method comprises predicting a respective temperature profile for each power unit that constitutes an electrical machine and/or each of one or more optional power electronic devices (13, 15). The method further comprises, in response to a determination that the predicted temperature profiles demonstrate that a respective upper temperature threshold for one of the power units (11, 12, 14, 22, 32) and/or one of the optional power electronic device(s) (13, 15) will be reached, determining a first adjusted distribution of force between the plurality of power units (11, 12, 14, 22, 32) which enables a delay of when a first one of the power units (11, 12, 14, 22, 32) and/or the optional power electronic device(s) (13, 15) is predicted to reach its upper temperature threshold; and controlling the plurality of power units (11, 12, 14, 22, 32) in accordance with the determined first adjusted distribution of force.

## Description

### TECHNICAL FIELD

The present disclosure relates in general to a method for controlling distribution of force provided to a vehicle by a plurality of power units of the vehicle to meet a total force demand of the vehicle. The present disclosure further relates in general to a control arrangement configured to control distribution of force provided to a vehicle by a plurality of power units of the vehicle to meet a total force demand of the vehicle.

Moreover, the present disclosure relates in general to a computer program and to a computer-readable medium. The present disclosure also relates in general to a cruise control system for a vehicle. Furthermore, the present disclosure relates in general to a vehicle.

### BACKGROUND

An effect of the ongoing electrification of land-based vehicles is that the number of vehicles comprising several power units, each configured to provide motive force to the vehicle, has increased. Examples of such vehicles include hybrid vehicles, comprising at least one electric motor and e.g., a combustion engine, and fully electric vehicles comprising a plurality of electric motors. Moreover, vehicles comprising two or more mechanically separated powertrains have been developed, each powertrain comprising at least one power unit. Examples thereof include vehicles comprising two or more electric drive axles and vehicles comprising in-wheel motors. Electrically driven trailers (so called E-trailers) are also being developed which, when connected to a a tractor vehicle, results in a vehicle combination comprising a plurality of mechanically separated powertrains. The plurality of power units and, if present, mechanically separated powertrains of the type of vehicles discussed above can be designed to have different properties to suit different drive cases or transport missions, but may of course also have substantially the same or similar configurations and properties.

Vehicles equipped with a plurality power units, which in turn may possibly be arranged in a plurality of mechanically separated powertrains, can utilize them in different ways to achieve e.g., improved energy efficiency in different driving situations and thereby extend the possible driving range for the amount of energy available onboard the vehicle. However, this can sometimes lead to non-optimal conditions to e.g., get the best possible performance and total power in an upcoming uphill or downhill.

### SUMMARY

The object of the present invention is to reduce the risk for loss of performance and/or total force provided to a vehicle, comprising a plurality of power units, in demanding driving situations.

The object is achieved by the subject-matter of the appended independent claim(s).

The present disclosure provides a method, performed by a control arrangement, for controlling distribution of force provided to a vehicle by a plurality of power units of the vehicle to meet a total force demand of the vehicle, said plurality of power units comprising at least one electrical machine. According to a first alternative, the vehicle comprises at least two mechanically separated powertrains, each of the at least two mechanically separated powertrains comprising at least one power unit of the plurality of power units. According to a second alternative, the plurality power units are comprised in a common powertrain of the vehicle. The vehicle may optionally further comprise one or more power electronic devices, each of said one or more power electronic devices operatively connected to a respective power unit of the plurality of power units. The method comprises a step of, based on predictive data and a currently planned distribution of force between the plurality of power units for an upcoming road section of the vehicle, predicting a respective temperature profile for the upcoming road section for each power unit, of the plurality of power units, that constitutes an electrical machine and/or each of the optional one or more power electronic devices. The method further comprises a step of, in response to a determination that the predicted temperature profiles demonstrate that a respective upper temperature threshold for one of the plurality of power units and/or one of the optional one or more power electronic devices will be reached, determining a first adjusted distribution of force between the plurality of power units for the upcoming road section which enables a delay of when a first one of the plurality of power units and/or the optional one or more power electronic devices is predicted to reach its upper temperature threshold. Moreover, the method comprises a step of controlling the plurality of power units in accordance with the determined first adjusted distribution of force as the vehicle travels the upcoming road section.

The herein described method relies on prediction of temperature profiles for each power unit that constitutes an electrical machine and/or each of the one or more optional power electronic devices operatively connected to a power unit, and, when relevant making a predictive adjustment of force distribution between the plurality of power units of a vehicle. Thereby, at least a delay of the point in time at which a first one of the most temperature sensitive and critical constituent components for meeting a total force demand may reach its upper temperature threshold is achieved compared to a case of not adjusting the force distribution. This in turn at least delays the point in time at which the total force provided by the plurality of power units to the vehicle may be insufficient to meet the total force needed for achieving a desired travelling speed of the vehicle. In fact, the herein described method increases the likelihood of being able to avoid that the respective temperature thresholds for at least the electrical machine(s) of the plurality of power units and/or the optional one or more power electronic devices are reached. Thus, the risk of a reduction in performance and/or loss of total force provided to the vehicle is reduced.

The step of predicting a respective temperature profile for the upcoming road section may comprise predicting a respective temperature profile for the upcoming road section for each power unit of the plurality of power units and optionally each of the optional one or more power electronic devices. This further reduces the risk of loss of performance and/or total force in view of taking into account the temperatures of all of the power units.

The step of determining a first adjusted distribution of force between the plurality of power units for the upcoming road section may for example comprise determining a first adjusted distribution of force between the plurality of power units which results in that the respective upper temperature thresholds for at least two power units of the plurality of power units are predicted to be reached simultaneously or within a predefined time interval, each power unit of said at least two power units constituting an electrical machine. Thereby, it may be possible to obtain the longest delay of when a first one of the respective upper temperature thresholds is reached, which in turn further reduces the risk for loss of performance and/or total force.

The vehicle may further comprise at least one subsystem that has an operating temperature which is dependent on an operating temperature and/or an operating condition of at least one power unit of the plurality of power units. In such a case, the method may further comprise, based on the predictive data and the currently planned distribution of a total force between the plurality of power units for an upcoming road section of the vehicle, predicting a temperature profile for the at least one subsystem for the upcoming road section. The method may further comprise, in response to a determination that the predicted temperature profiles demonstrate that an upper temperature threshold for the at least one subsystem will be reached prior to a respective upper temperature threshold for each of the plurality of power units and/or each of the optional one or more power electronic devices will be reached, determining a second adjusted distribution of total force between the plurality of power units for the upcoming road section which enables a delay of when a first one of the plurality of power units, the optional one or more power electronic devices and the at least one subsystem is predicted reach its upper temperature threshold. The method may then comprise controlling the plurality of power units in accordance with the determined second adjusted distribution of force as the vehicle travels the upcoming road section. Thereby, the herein described method may also take into account subsystems, not being a physical part of a powertrain of the vehicle, whose operating temperature may affect the performance and/or total force.

The present disclosure further relates to a computer program comprising instructions which, when executed by a computer, cause the computer to carry out the method as described above.

The present disclosure further relates to a computer-readable medium comprising instructions which, when executed by a computer, cause the computer to carry out the method as described above.

The present disclosure further provides a control arrangement configured to control distribution of force provided to a vehicle by a plurality of power units of the vehicle to meet a total force demand of the vehicle, said plurality of power units comprising at least one electrical machine. According to a first alternative, the vehicle comprises at least two mechanically separated powertrains, each of the at least two mechanically separated powertrains comprising at least one power unit of the plurality of power units. According to a second alternative, the plurality power units are comprised in a common powertrain of the vehicle. The vehicle may optionally further comprise one or more power electronic devices, each of said one or more power electronic devices operatively connected to a respective power unit of the plurality of power units. The control arrangement is configured to, based on predictive data and a currently planned distribution of force between the plurality of power units for an upcoming road section of the vehicle, predict a respective temperature profile for the upcoming road section for each power unit, of the plurality of power units, that constitutes an electrical machine and/or each of the optional one or more power electronic devices. The control arrangement is further configured to, in response to a determination that the predicted temperature profiles demonstrate that a respective upper temperature threshold for one of the plurality of power units and/or one of the optional one or more power electronic devices will be reached, determine a first adjusted distribution of force between the plurality of power units for the upcoming road section which enables a delay of when a first one of the plurality of power units and/or the optional one or more power electronic devices is predicted to reach its upper temperature threshold. Moreover, the control arrangement is configured to control the plurality of power units in accordance with the determined first adjusted distribution of force as the vehicle travels the upcoming road section.

The control arrangement provides the same advantages as described above with reference to the corresponding method for controlling distribution of force provided to a vehicle by a plurality of power units of the vehicle to meet a total force demand of the vehicle.

The control arrangement may be configured to, based on predictive data and a currently planned distribution of force between the plurality of power units for an upcoming road section of the vehicle, predict a respective temperature profile for the upcoming road section for each power unit of the plurality of power units that constitutes an electrical machine and optionally each of the optional one or more power electronic devices.

The control arrangement may be configured to determine the first adjusted distribution of force between the plurality of power units based on a criterion that the respective upper temperature thresholds for at least two power units of the plurality of power units should be predicted to be reached simultaneously or within a predefined time interval, each of said at least two power units constituting an electrical machine.

As previously mentioned, the vehicle may further comprise at least one subsystem that has an operating temperature which is dependent on an operating temperature and/or an operating condition of at least one power unit of the plurality of power units. In such a case, the control arrangement may further be configured to, based on the predictive data and the currently planned distribution of a total force between the plurality of power units for an upcoming road section of the vehicle, predict a temperature profile for the at least one subsystem for the upcoming road section. The control arrangement may further be configured to, in response to a determination that the predicted temperature profiles demonstrate that an upper temperature threshold for the at least one subsystem will be reached prior to a respective upper temperature threshold for each of the plurality of power units and/or each of the optional one or more power electronic devices will be reached, determine a second adjusted distribution of total force between the plurality of power units for the upcoming road section which enables a delay of when a first one of the plurality of power units, the optional one or more power electronic devices and the at least one subsystem is predicted to reach its upper temperature threshold. The control arrangement may also be configured to control the plurality of power units in accordance with the determined second adjusted distribution of force as the vehicle travels the upcoming road section.

The present disclosure also relates to a cruise control system for a vehicle, said cruise control system comprising the above described control arrangement.

Moreover, the present disclosure relates to a vehicle comprising a plurality of power units. The plurality of power units comprises at least one electrical machine. The may optionally further comprise one or more power electronic devices, each of said one or more power electronic devices operatively connected to a respective power unit of the plurality of power units. The vehicle further comprises the control arrangement as described above.

According to a first alternative, the vehicle comprises at least two mechanically separated powertrains, each of the at least two mechanically separated powertrains comprising at least one power unit of the plurality of power units.

According to a second alternative, the plurality of power units are comprised in a common powertrain of the vehicle.

The vehicle may further comprise one or more subsystems. Each of said one or more subsystems may be either (i) an energy storage system configured to power at least one power unit of the plurality of power units, (ii) a temperature regulating circuit configured to regulate operating temperature of at least one fuel cell of the vehicle, (iii) a temperature regulating circuit configured to regulate operating temperature of a transmission arrangement of the vehicle, or (iv) an exhaust gas aftertreatment system.

The vehicle may be a land-based heavy vehicle, such as a bus, a truck or a truck-trailer combination, but is not limited thereto. The vehicle may be a fully electrical vehicle, e.g., a battery electric vehicle, a hybrid vehicle, or a fuel cell vehicle.

### BRIEF DESCRIPTION OF DRAWINGS

- Fig. 1: illustrates a side view of a first example of a vehicle,
- Fig. 2: illustrates a side view of a second example of a vehicle,
- Fig. 3: schematically illustrates a first example of a powertrain of a vehicle,
- Fig. 4: schematically illustrates an exemplifying embodiment of a vehicle comprising a first powertrain and a second powertrain that are mechanically separated from each other,
- Fig. 5: represents a flowchart schematically illustrating one exemplifying embodiment of the herein described method for controlling distribution of force, provided to a vehicle by a plurality of power units of the vehicle, to meet a total force demand of the vehicle,
- Fig. 6: illustrates examples of predicted temperature profiles for two power units of a vehicle,
- Fig. 7: schematically illustrates an exemplifying embodiment of a device which may comprise, consist of, or be comprised in a control arrangement configured to perform the herein described method.

### DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

A vehicle is in the present disclosure considered to mean any means that may be used for transporting people and/or cargo. A vehicle may consist of a single vehicle unit. Examples of a vehicle consisting of a single vehicle unit includes a car, a rigid truck, a tractor truck, a bus, a self-powered trailer, or a self-powered dolly, but are not limited thereto. Alternatively, a vehicle may constitute a vehicle combination comprising at least two vehicle units which are physically linked when travelling. A vehicle combination may be a vehicle comprising a tractor vehicle and at least one trailing vehicle. Examples of vehicle combinations include a semi-trailer truck, a rigid truck pulling a semitrailer using a dolly, or a vehicle train comprising a rigid truck and one or more trailers, but are not limited thereto.

A vehicle powertrain comprises at least one power unit (also known as a propulsion unit) and a driveline configured to transmit propulsion/braking force to at least one drive wheel of the vehicle. Such a driveline typically comprises at least one transmission unit, which e.g., may be a single reduction gear/single speed transmission unit or a multispeed transmission unit. A driveline may further comprise one or more shafts, for example a drive shaft. A driveline may also comprise other types of components, such as one or more joint devices (e.g. universal joints or constant velocity joints), a clutch, a differential etc..

In the present disclosure, two or more powertrains are considered to be mechanically separated from each other when there is no possibility for directly transmitting torque between said powertrains and the powertrains are connected to different drive wheel(s) of the vehicle. In other words, two powertrains are mechanically separated when a power unit of one of the powertrains cannot transmit torque to the drive wheel(s) of the other powertrain and vice versa.

Moreover, the term "upcoming road section" is herein used to describe a section of the road in front of a vehicle, and which said vehicle is about to travel. The upcoming road section may suitably be a road section immediately in front of the vehicle, but the present disclosure is not limited thereto. The upcoming road section may for example start a few meters in front of the vehicle.

The present disclosure provides a method for controlling distribution of force provided to a vehicle by a plurality of power units of the vehicle to meet a total (motive or braking) force demand of the vehicle. The plurality of power units may consist of two, three, four, or even more than four power units. At least one power unit of the plurality of power units consists of an electrical machine (also known as an electrical motor). Said electrical machine may be powered by energy stored in an energy storage system of the vehicle and/or energy produced by e.g., a fuel cell stack (if present) of the vehicle. In addition to the at least one electrical machine, the plurality of power units may comprise one or more power units not constituting electrical machines, such as a combustion engine. According to some embodiments, at least two power units of the plurality of power units may constitute electrical machines. It is also possible that each power unit of the plurality of power units constitutes an electrical machine.

According to a first alternative, the vehicle comprises at least two mechanically separated powertrains, each of the at least two mechanically separated powertrains comprising at least one power unit of the plurality of power units. According to a second alternative, the plurality of power units may be comprised in a common powertrain of the vehicle. Such a common powertrain of the vehicle may be the sole powertrain of the vehicle, but the present disclosure is not limited thereto.

Moreover, the vehicle may be a vehicle consisting of a single vehicle unit, or a vehicle constituting a vehicle combination comprising at least two vehicle units. In case the vehicle comprises at least two mechanically separated powertrains, these two mechanically separated powertrains may be comprised in a single vehicle unit or in different vehicle units of the vehicle.

In addition to a plurality of power units, the vehicle may optionally further comprise one or more power electronic devices, wherein each of said one or more optional power electronic devices is operatively connected to a respective power unit of the plurality of power units. Examples of such power electronic devices include inverters and/or converters, but are not limited thereto. Typically, each power unit (of the plurality of power units) that constitutes an electrical machine may have at least one power electronic device (of the one or more power electronic devices) operatively connected thereto.

The herein described method comprises a step of, based on predictive data and a currently planned distribution of force between the plurality of power units for an upcoming road section of the vehicle, predicting a respective temperature profile for the upcoming road section for each power unit (of the plurality of power units) that constitutes an electrical machine and/or each of the optional one or more power electronic devices. The predictive data regarding the upcoming road section may for example be determined through knowledge of the geographical position of the vehicle, e.g. using a global positioning system, in combination with map data. The above mentioned currently planned distribution of force between the plurality of power units may e.g., be represented by a currently selected driving strategy for the vehicle for an upcoming road section.

As evident from the above, the step of predicting a temperature profile for the upcoming road section may comprise predicting a respective temperature profile for each power unit (of the plurality of power units) that constitutes an electrical machine. In case one power unit of the plurality of power units constitutes a combustion engine, it may not always be needed to predict the temperature profile thereof since combustion engines for vehicles are typically not expected to reach temperatures where there is a risk for increased wear or risk for need to limit the force output. Therefore, it may often be possible to omit a step of predicting a temperature profile of a power unit constituting a combustion engine. The present method may however naturally comprise predicting a temperature profile for each power unit of the plurality of power units, and thus also for a combustion engine, if desired. This may for example be relevant for combustion engines dimensioned to operate close to an upper temperature threshold thereof or combustion engines operated on fuel associated with high fuel ignition temperatures, such as hydrogen. Thus, according to one exemplifying embodiment of the herein described method, the step of predicting a respective temperature profile for the upcoming road section comprises predicting a respective temperature profile for the upcoming road section for each power unit of the plurality of power units, and suitably also for each of the optional one or more power electronic devices.

In some cases, it may be previously known that the one or more power electronic devices, if present, are more temperature sensitive compared to each power unit (of the plurality of power units) that constitutes an electrical machine. In such cases, it may be sufficient to merely predicting temperature profiles for each such power electronic device. Similarly, it may in some cases be previously known that each power unit (of the plurality of power units) that constitutes an electrical machine is more temperature sensitive than the one or more optional power electronic devices. In such cases, it may be possible to omit predicting a temperature profile for each of the one or more optional power electronic devices. It should however be noted that in many instances it may be appropriate to predict temperature profiles for each power unit that constitutes an electrical machine as well as each of the one or more optional power electronic devices.

The method may thereafter comprise a step of determining whether any one of the predicted temperature profiles demonstrate that an upper temperature threshold will be reached for the power unit and/or the power electronic device for which the corresponding temperature profile has been predicted. It should here be noted that the respective upper temperature thresholds of the power units may differ from each other or be the same, depending on the respective configurations of the power units as well as the reason for each of the upper temperature thresholds. Similarly, the respective upper temperature threshold for one power electronic device may differ from, or be the same as for, another power electronic device. Furthermore, the respective upper temperature thresholds may be fixed upper temperature thresholds (i.e. not varying over time) or may vary over time depending on the reason(s) therefore.

Each one of the respective upper temperature thresholds for the power units and/or optional power electronic device(s) may for example correspond to an upper temperature threshold at which a limitation of the force which a power unit may provide to the vehicle would occur. It should here be noted that, for a power electronic device, this would be where the high temperature would affect the force provided by the power unit to which the power electronic device is operatively connected.

According to another alternative, each one of the respective upper temperature thresholds for the power units and/or optional power electronic device(s) may correspond to a temperature at which increased wear, or other forms of damage, of the power unit and/or power electronic device could occur if operated at such a temperature, at least for an extended period of time. Increased wear/damage may in turn reduce the performance of the vehicle and limit the service life the power units and/or power electronic devices. In other words, the upper temperature thresholds may be set to ensure a desired life of the power units and/or power electronic devices.

It should be noted that it is also possible that the upper temperature threshold for one of the power units and/or power electronic device(s) may correspond to a temperature at which a limitation of force from a power unit may occur, whereas the upper temperature threshold for another one of the power units and/or power electronic device(s) may correspond to a temperature at which there is a risk for damage of the relevant power unit or power electronic device.

The method further comprises a step of, in response to a determination that the predicted temperature profiles demonstrate that a respective upper temperature threshold for one (or more) of the plurality of power units and/or one of the optional one or more power electronic devices will be reached, determining a first adjusted distribution of force between the plurality of power units for the upcoming road section which enables a delay of when a first one of the plurality of power units and/or the optional one or more power electronic devices is predicted to be reached. In other words, the method comprises a step of determining a first adjusted distribution of force between the plurality of power units (still being sufficient to meet the total force demand of the vehicle) in situations where one of the plurality of power units and/or the optional one or more power electronic devices is predicted to reach its respective upper temperature threshold in advance of the other ones of the power unit(s) and optional power electronic devices for which temperature profiles have been predicted. For the purpose of determining the above mentioned first adjusted distribution of force, the method may for example comprise predicting further temperature profiles for the power units and/or the optional one or more power electronic devices under the assumption of a different distribution of force between the plurality of power units compared to the currently planned distribution of force, and thereafter selecting the alternative distribution which enables a delay (suitably the longest delay) in time/distance until a first one of the respective upper temperature threshold is reached.

In some cases, it may be appropriate that two or more power units of the plurality of power units would reach their respective upper temperature thresholds at substantially the same point in time, especially in case of the respective upper temperature thresholds corresponding to temperature thresholds at which a limitation on the force each of said power units are able to provide to the vehicle occurs and said two or more power units each constitutes an electrical machine. Thereby, there would be delay of the point in time at which a degradation of the exerted force (and thus an affect on the travelling speed of the vehicle) would occur. Thus, the step of determining a first adjusted distribution of force between the plurality of power units for the upcoming road section comprises determining a first adjusted distribution of force between the plurality of power units which results in that the respective upper temperature thresholds for at least two power units of the plurality of power units are predicted to be reached simultaneously or within a predefined time interval, each power unit of said at least two power units constituting an electrical machine.

The method further comprises a step of controlling the plurality of power units in accordance with the determined first adjusted distribution of force as the vehicle travels the upcoming road section.

The method as described above may be supplemented by also taking into consideration one or more subsystems of the vehicle in case the operating temperature of such subsystem(s) is dependent on an operating temperature and/or an operating condition of at least one power unit of the plurality of power units. In the present disclosure, a subsystem of a vehicle is considered to mean any system of the vehicle which is not a physical part of a powertrain of the vehicle. Furthermore, a subsystem whose operating temperature is "dependent on" an operating temperature and/or operating condition of at least one power unit is considered to mean a subsystem whose operating temperature may be at least partly affected by an alteration of an operating temperature and/or operating condition of at least one power unit. One example of such a subsystem may be an energy storage system configured to store energy which is to be used for powering one or more power units, each constituting an electrical machine, of the plurality of power units. The operating temperature of such an energy storage system may for example be affected by the discharging/charging rate thereof, which in turn may be dependent of the energy needed for powering the one or more power units or the energy created by the one or more power units during regenerative braking of the vehicle and used for charging of the energy storage system. The operating temperature of an energy storage system may also be affected by one or more power units(s) of the plurality of power units if comprising a temperature regulating circuit configured to control the operating temperature of one or more batteries of the energy storage device, the flow and/or temperature of a circulating medium in such a temperature regulating circuit being dependent of the operating temperature and/or operating condition of one or more of the power units. As is well known to a person skilled in the art, the operating temperature of an energy storage system e.g., affects various degradation mechanisms of the electrochemical cells of the energy storage system as well as affects discharging/charging rates, and may therefore affect the performance of the vehicle. Other examples of subsystems whose operating temperature may be affected by an operating temperature and/or operating condition of at least one power unit of the plurality of power units include a temperature regulating circuit configured to regulate operating temperature of at least one fuel cell of the vehicle, a temperature regulating circuit configured to regulate operating temperature of a transmission arrangement of the vehicle, and an exhaust gas aftertreatment system, but are not limited thereto. Also the operating temperatures of such subsystems may affect the performance of the vehicle. For example, the operating temperature of a fuel cell affects the efficiency thereof as well as influences the degradation mechanisms thereof. Moreover, the operating temperature of a transmission arrangement of the vehicle affects the wear of the transmission arrangement as well as energy losses in the transmission arrangement. Furthermore, the operating temperature of an exhaust gas aftertreatment affects its ability to reduce emissions and also affects the degradation of said system.

Thus, in case the vehicle comprises at least one subsystem that has an operating temperature which is dependent on an operating temperature and/or an operating condition of at least one power unit of the plurality of power units, the herein described method may comprise a step of, based on the predictive data and the currently planned distribution of a total force between the plurality of power units for an upcoming road section of the vehicle, predicting a temperature profile for the at least one subsystem for the upcoming road section. If present, said step is performed in addition to the step of predicting a respective temperature profile for the upcoming road section for each power unit, of the plurality of power units, that constitutes an electrical machine and/or each of the optional one or more power electronic devices. In other words, predicted temperature profiles are obtained for each power unit that constitutes an electrical machine and/or each of the optional one or more power electronic devices as well as for the at least one subsystem. Furthermore, the method may comprise a step of, in response to a determination that the predicted temperature profiles demonstrate that an upper temperature threshold for the at least one subsystem will be reached prior to a respective upper temperature threshold for each of the plurality of power units and/or each of the optional one or more power electronic devices will be reached, determining a second adjusted distribution of total force between the plurality of power units for the upcoming road section which enables a delay of when a first one of the plurality of power units, the optional one or more power electronic devices and the at least one subsystem is predicted reach its upper temperature threshold. It should here be noted that, in case the predicted temperature profiles for each power unit that constitutes an electrical machine and/or each of the optional one or more power electronic devices demonstrate that their respective upper temperature thresholds are not reached whereas the predicted temperature profile for the subsystem demonstrate that the upper temperature threshold for the subsystem is reached, the predicted temperature profiles inherently demonstrate that the upper temperature threshold for the at least one subsystem will be reached prior to a respective upper temperature threshold for each of the plurality of power units and/or each of the optional one or more power electronic devices will be reached. The method may thereafter comprise a step of controlling the plurality of power units in accordance with the determined second adjusted distribution of force as the vehicle travels the upcoming road section.

The upper temperature threshold for such a subsystem as described above may be an upper temperature threshold above which the ability of one or more power units to provide force to the vehicle may be affected. For example, in case the subsystem is an energy storage system, it may not be possible to discharge/charge the energy storage system at a rate needed by the one or more power units dependent thereof due to the high temperature. This would in turn limit the force provided by the power unit(s) on the vehicle, and may thus affect the travelling speed of the vehicle. Alternatively, the upper temperature threshold of such a subsystem may be an upper temperature threshold selected to avoid damage of the subsystem and/or ensure desired service life thereof. In case of an energy storage system, this may for example be a temperature threshold selected to preserve capacity.

Prediction of a temperature profile for a power unit, a power electronic device, or a subsystem may for example be made based on predetermined temperature models therefore and/or predetermined data relating to temperature resulting from different operating conditions. The herein described method is not limited to any specific manner in which such a prediction is made, and any previously known method for predicting temperatures may be used.

It should also be noted that the predicted temperature profiles may comprise or consist of a plurality of predicted discrete values of temperature at various distance points along the relevant road section. Suitably, one or more of the predicted temperature profiles may be a substantially continuous temperature profile for the relevant road section.

The performance of the herein described method for controlling distribution of force provided to a vehicle by a plurality of power units of the vehicle to meet a total force demand of the vehicle may be governed by programmed instructions. These programmed instructions may take the form of a computer program which, when executed by a computer, cause the computer to effect desired forms of control action. Such a computer may for example be comprised in the control arrangement as described herein. A computer is in the present disclosure considered to mean any hardware or hardware/firmware device implemented using processing circuity such as, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, an application-specific integrated circuit, or any other device capable of electronically performing operations in a defined manner.

The above described programmed instructions, which may take the form of a computer program, may be stored on a computer-readable medium. Hence, the present disclosure also relates to a computer-readable medium storing instructions, which when executed by computer, cause the computer to carry out the herein described method for controlling distribution of force provided to a vehicle by a plurality of power units of the vehicle to meet a total force demand of the vehicle. The computer-readable medium may be a non-transitory computer-readable medium, such as a tangible electronic, magnetic, optical, infrared, electromagnetic, and/or semiconductor system, apparatus, and/or device.

The present disclosure further relates to a control arrangement configured to control distribution of force provided to a vehicle by a plurality of power units of the vehicle to meet a total force demand of the vehicle. The control arrangement may be configured to perform any one of the steps of the method for controlling distribution of force provided to a vehicle by a plurality of power units of the vehicle to meet a total force demand of the vehicle as described above.

More specifically, in accordance with the present disclosure, a control arrangement configured to control distribution of force provided to a vehicle by a plurality of power units of the vehicle to meet a total force demand of the vehicle is provided. The plurality of power units of the vehicle comprises at least one electrical machine. The vehicle may optionally further comprise one or more power electronic devices, each of said one or more power electronic devices operatively connected to a respective power unit of the plurality of power units. According to a first alternative, the vehicle comprises at least two mechanically separated powertrains, each of the at least two mechanically separated powertrains comprising at least one power unit of the plurality of power units. According to a second alternative, the plurality of power units are comprised in a common powertrain of the vehicle. The control arrangement is configured to, based on predictive data and a currently planned distribution of force between the plurality of power units for an upcoming road section of the vehicle, predict a respective temperature profile for the upcoming road section for each power unit, of the plurality of power units, that constitutes an electrical machine and/or each of the optional one or more power electronic devices. The control arrangement is further configured to, in response to a determination that the predicted temperature profiles demonstrate that a respective upper temperature threshold for one of the plurality of power units and/or one of the optional one or more power electronic devices will be reached, determine a first adjusted distribution of force between the plurality of power units for the upcoming road section which enables a delay of when a first one of the plurality of power units and/or the optional one or more power electronic devices is predicted to reach its upper temperature threshold. Moreover, the control arrangement is configured to control the plurality of power units in accordance with the determined first adjusted distribution of force as the vehicle travels the upcoming road section.

The control arrangement may comprise one or more control units. In case of the control arrangement comprising a plurality of control units, each control unit may be configured to control a certain function/step or a certain function/step may be divided between more than one control units. The control arrangement may be a control arrangement of e.g., a power unit management system and/or a cruise control system of the vehicle. Alternatively, the control arrangement may be any other control arrangement of the vehicle but configured to communicate with the plurality of power units for the purpose of performing the herein described method.

As mentioned above, the control arrangement may optionally be comprised in a cruise control system. In such a case, the above described method for controlling distribution of force provided to a vehicle by a plurality of power units of the vehicle to meet a total force demand of the vehicle may alternatively be described as performed by the cruise control system. Such a cruise control system may for example be configured to determine a suitable driving strategy (including distribution of force between the plurality of power units) for the upcoming road section based on simulation of a plurality of vehicle speed profiles for various driving strategies for the upcoming road section, and selecting the simulated vehicle speed profile which appears to be the most appropriate from the plurality of simulated vehicle speed profiles as the planned driving strategy to be used for the control of vehicle speed. Typically, the driving strategy resulting in the most energy efficient vehicle speed profile, which is able to keep the vehicle speed within a desired vehicle speed range, is thereafter usually selected as the (currently) planned driving strategy for the upcoming road section. However, by means of the herein described method, such a planned driving strategy may be altered, when needed, in response to a determination that the predicted temperature profiles demonstrate that a respective upper temperature threshold for one of the plurality of power units, one of the optional one or more power electronic devices will be reached, and/or the optional subsystem will be reached. This is achieved by the change from a currently planned distribution of force between the plurality of power units to the first adjusted distribution of force or, when applicable second adjusted distribution of force between the plurality of power units. An adjustment of distribution of force between the plurality of power units will inherently result in an adjustment of the driving strategy for the upcoming road section since the distribution of force is part of the driving strategy.

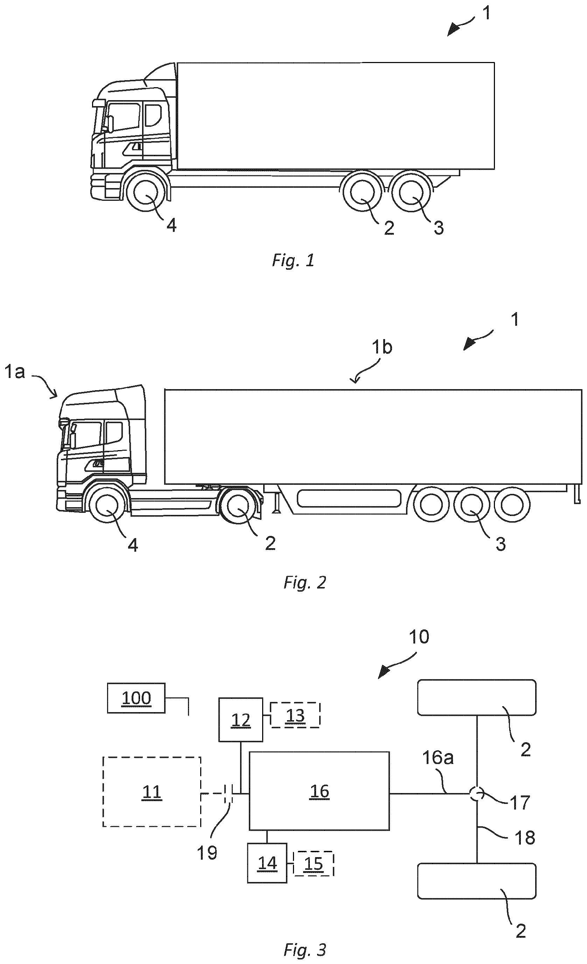

Figure 1 illustrates a side view of a first example of a vehicle 1. The vehicle 1 is here illustrated as a rigid truck, and thus constitutes an example of a vehicle consisting of a single vehicle unit. The vehicle 1 comprises one or more first drive wheels 2 configured to be driven by a first powertrain (not shown) of the vehicle. In case of the vehicle 1 comprising a plurality of first drive wheels 2, these are typically evenly distributed on opposing sides of the vehicle 1, which is also the reason for only one first drive wheel 2 being visible in the figure. The vehicle 1 may optionally further comprise one or more second drive wheels 3 configured to be driven by a second powertrain of the vehicle, said second powertrain being separate from the first powertrain. In case the vehicle 1 comprises a plurality of second drive wheels 3, these are typically evenly distributed on opposing sides of the vehicle 1. The vehicle 1 further comprises front wheels 4. The front wheels 4 may often be non-driven wheels but could alternatively be drive wheels, in which case they are driven by one or more powertrains of the vehicle.

Figure 2 illustrates a side view of a second example of a vehicle 1. The vehicle 1 is here illustrated as a semi-trailer truck, and thus constitutes an example of a vehicle constituting a vehicle combination comprising two vehicle units. More specifically, the exemplified vehicle 1 comprises a first vehicle unit 1a in the form of a tractor vehicle (illustrated as a tractor truck) and a second vehicle unit 1b in the form of a trailing vehicle (herein illustrated as a semi-trailer). Like the vehicle 1 shown in Figure 1, the first vehicle unit 1a comprises one or more first drive wheels 2 configured to be driven by a first powertrain of the vehicle. The first powertrain of the vehicle 1 thus constitutes a powertrain of the first vehicle unit 1a. The first vehicle unit further comprises front wheels 4, which may be non-driven wheels or drive wheels. The vehicle further comprises one or more second drive wheels 3 configured to be driven by a second powertrain of the vehicle. In the illustrated case, the one or more second drive wheels 3 are part of the second vehicle unit 1b. Thus, the vehicle 1 comprises a second powertrain comprised in the second vehicle unit 1b.

Figure 3 schematically illustrates an example of a powertrain 10 of a vehicle, such as the vehicle 1 shown in Figure 1. The exemplified powertrain 10 comprises a first power unit 12 constituting an electrical machine. A first power electronic device 13 may be operatively connected to the first power unit 12. The exemplified powertrain 10 further comprises a second power unit 14 constituting an electrical machine. A second power electronic device 15 may be operatively connected to the second power unit 14. Each of the first and second power electronic devices 13, 15 may for example be an inverter. Furthermore, each of the first and second power units 12, 14 may be powered by an energy storage system (not shown).

The exemplified powertrain 10 further comprises a transmission arrangement 16 configured to selectively transfer force from the first power unit 12 and the second power unit 14 at different gear ratios. Depending on the driving situation and force demand of a vehicle comprising the powertrain 10, each of the first and second power units 12, 14 may be operated independently or jointly. An output shaft 16a of the transmission arrangement 16 is connected, usually via a differential 17, to a drive shaft 18 of the powertrain 10 in order to transfer the force provided by the power units to the drive wheels 2.

As shown in the figure, the first power unit 12 and the second power unit 14 are comprised in a common powertrain 10. The powertrain 10 may further comprise a third power unit 11, such as a combustion engine, if desired. The third power unit 11 may be selectively connected to the transmission arrangement 16 via a clutch 19.

The powertrain 10 may be controlled by a control arrangement 100 configured therefore. Said control arrangement 100 may be configured to perform the herein described method for controlling distribution of force provided to a vehicle by a plurality of power units of the vehicle to meet a total force demand of the vehicle.

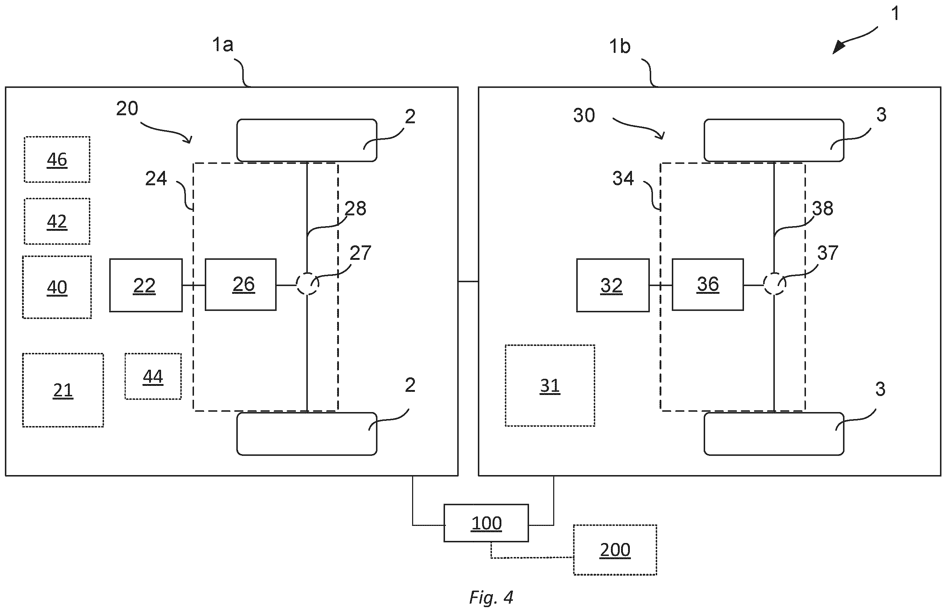

Figure 4 schematically illustrates an exemplifying embodiment of a vehicle 1 comprising a first powertrain 20 and a second powertrain 30 that are mechanically separated from each other. The vehicle 1 is in the figure shown as a vehicle combination comprising a first vehicle unit 1a and a second vehicle unit 1b, and may thus for example correspond to the vehicle shown in Figure 2.

As shown in the figure, the first powertrain 20 of the vehicle may be arranged in the first vehicle unit 1a whereas the second powertrain 30 may be arranged in the second vehicle unit 1b of the vehicle 1. It should however be noted that the first and second vehicle powertrains 20, 30 may alternatively be arranged in a common vehicle unit, for example in case the vehicle 1 would consist of a single vehicle unit. Furthermore, any one of the vehicle units 1a, 1b may comprise more powertrains than illustrated in the figure, if desired.

The first powertrain 20 comprises a first power unit 22 configured to provide force to a plurality of first drive wheels 2 via a first driveline 24. The first driveline 24 comprises a first transmission arrangement 26 connected to, optionally via a first differential 27, a first drive shaft 28. The first drive shaft 28 is in turn connected to the first drive wheels 2. The first drive shaft 28 and the first differential 27, if present, are comprised in the first driveline 24 of the first powertrain 20.

The second powertrain 30 comprises a second power unit 32 configured to provide force to a plurality of second drive wheels 3 via a second driveline 34. The second driveline 34 comprises at least one second transmission arrangement 36 connected to, optionally via a second differential 37, a second drive shaft 38. The second drive shaft 38 is in turn connected to the second drive wheels 3. The second drive shaft 38 and the second differential 37, if present, are comprised in the second driveline 34 of the second powertrain 30.

At least one of the power units 22, 32 of the vehicle 1 constitutes an electrical machine. Suitably, each of the power units 22, 32 constitutes an electrical machine. For the purpose of powering such electrical machines, the first vehicle unit 1a may comprise a first energy storage system 21 and/or the second vehicle unit 1b may comprise a second energy storage system 31. The energy storage system(s) 21, 31 are not comprised in of any one of the powertrains 20, 30, but may be affected by how the respective power units 22, 32 are operated. The energy systems 21, 31 are each examples of subsystems whose operating temperature is dependent of the operating temperature and/or operating condition of at least one power unit of the plurality of power units 22,32. It is also possible to power an electrical machine using a fuel cell stack 40. In the figure, such a fuel cell stack 40 is shown to be comprised in the first vehicle unit 1a, but may alternatively or additionally be comprised in the second vehicle unit 1b. For the purpose of controlling the operating temperature of one or more fuel cells of the fuel cell stack, the vehicle 1 may further comprise a temperature regulating circuit configured to regulate operating temperature of at least one fuel cell of the vehicle, schematically represented in the figure by the box 42. The fuel cell stack 40 and the temperature regulating circuit 42 configured to regulate operating temperature of a fuel cell are each an example of a subsystem of the vehicle 1. Yet another example of such a subsystem whose operating temperature is dependent of the operating temperature and/or operating condition of at least one power unit of the plurality of power units 22, 32 may be a temperature regulating circuit configured to regulate operating temperature of a transmission arrangement of the vehicle, which in the figure is schematically illustrated by box 44.

Furthermore, although not shown in the figure, the vehicle 1 may comprise one or more power electronic devices, each of said one or more power electronic devices being operatively connected to a respective power unit of the power units 22, 32 (compare with the power electronic devices 13, 15 shown in Figure 3).

It should here be noted that although the first powertrain 20 and the second powertrain 30 are illustrated in the figure as comprising only one respective power unit 22, 32, the present disclosure is not limited thereto. For example, the first powertrain 20 and/or the second powertrain 30 may correspond to the exemplified powertrain 10 shown in Figure 3. In case one of the first powertrain 20 and/or second powertrain 30 comprises a combustion engine (compare with the combustion engine 11 shown in Figure 3), the exhaust gases generated by such a combustion engine needs to be treated before released into the atmosphere. For said reason, the vehicle 1 may further comprise an exhaust gas aftertreatment system 46 as shown in Figure 4. It should here be noted that although the exhaust gas aftertreatment system 46 is shown as comprised in the first vehicle unit 1a, an exhaust gas aftertreatment system may alternatively, or additionally, be comprised in the second vehicle unit 1b. An exhaust gas aftertreatment system is one example of a subsystem whose operating temperature is dependent on an operating temperature and/or an operating condition of at least one power unit of the plurality of power units (when the plurality of power units comprises a combustion engine).

The vehicle 1 may further comprise a control arrangement 100 configured to perform the herein described method for controlling distribution of force provided to a vehicle by a plurality of power units of the vehicle to meet a total force demand of the vehicle. The control arrangement 100 may be configured to control both the first powertrain 20 and the second powertrain 30, or at least the power units 22, 32 thereof, for the purpose of performing the herein described method. The control arrangement 100 may optionally be comprised in, or at least configured to communicate with, a cruise control system 200 of the vehicle 1, in case the vehicle 1 comprises such a cruise control system.

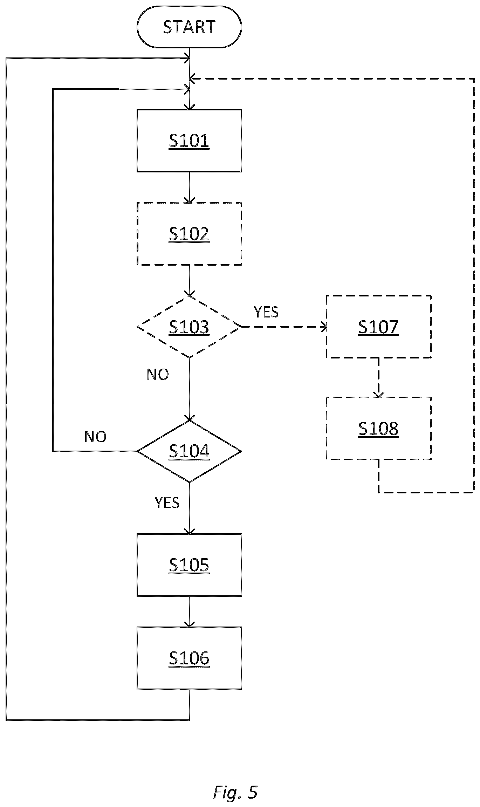

Figure 5 represents a flowchart schematically illustrating one exemplifying embodiment of the herein described method for controlling distribution of force, provided to a vehicle by a plurality of power units of the vehicle, to meet a total force demand of the vehicle. Optional steps are in the flowchart illustrated by dashed lines. As previously mentioned, the plurality of power units of the vehicle comprises at least one electrical machine and the vehicle may optionally comprise one or more power electronic devices, each of said one or more power electronic devices operatively connected to a respective power unit of the plurality of power units.

The method comprises a step S101 of, based on predictive data and a currently planned distribution of force between the plurality of power units for an upcoming road section of the vehicle, predicting a respective temperature profile for the upcoming road section for each power unit, of the plurality of power units, that constitutes an electrical machine and/or each of the optional one or more power electronic devices. Thus, step S101 may comprise predicting a respective temperature profile for each electrical machine of the plurality of power units. Alternatively, or additionally, step S101 may comprise predicting a respective temperature profile for each of the one or more optional power electronic devices, if present. In case the plurality of power units comprises one or more power units that do not constitute an electrical machine, step S101 may optionally further comprise predicting temperature profiles also for said power unit(s).

The vehicle may in some cases comprise at least one subsystem that has an operating temperature which is dependent on an operating temperature and/or an operating condition of at least one power unit of the plurality of power units. In such cases, the method may further comprise a step S102 of, based on the predictive data and the currently planned distribution of a total force between the plurality of power units for an upcoming road section of the vehicle, predicting a temperature profile for the at least one subsystem for the upcoming road section.

In case the method comprises step S102, the method may further comprise a step S103 of determining whether the predicted temperature profiles, obtained in steps S101 and S102, demonstrate that an upper temperature threshold for the at least one subsystem will be reached prior to a respective upper temperature threshold for each of the plurality of power units and/or each of the optional one or more power electronic devices will be reached. In case it is determined in step S103 that an upper temperature threshold for the at least one subsystem will not be reached prior to a respective upper temperature threshold for each of the plurality of power units and/or each of the optional one or more power electronic devices will be reached, the method may proceed to the subsequent step S104.

The method may further comprise a step S104 of determining whether the predicted temperature profiles obtained in step S101 demonstrate that a respective upper temperature threshold for one of the plurality of power units and/or one of the optional one or more power electronic devices will be reached. In particular, step S104 may comprise determining whether the predicted temperature profiles demonstrate that a respective upper temperature threshold for one of the plurality of power units and/or one of the optional one or more power electronic devices will be reached prior to the respective temperature thresholds for the other ones of the plurality of power units and/or one of the optional one or more power electronic devices will be reached.

In case it is determined in step S104 that the predicted temperature profiles demonstrate that no one of the power units and/or optional power electronic devices for which a temperature profile has been predicted will reach its respective upper temperature threshold, the method may be reverted to start as shown in the figure, or alternatively ended. However, in case it is determined in step S104 that the predicted temperature profiles demonstrate that a respective upper temperature threshold for one of the plurality of power units and/or one of the optional one or more power electronic devices will be reached, the method proceeds to step S105.

It should here be noted that, in case it is determined in step S104 that the predicted temperature profiles would demonstrate that the respective upper temperature thresholds would be reached substantially simultaneously, the method may be reverted to start or ended.

Step S105 comprises determining a first adjusted distribution of force between the plurality of power units for the upcoming road section which enables a delay of when a first one of the plurality of power units and/or the optional one or more power electronic devices is predicted to reach its upper temperature threshold.

After step S105, the method proceeds to a step S106 of controlling the plurality of power units in accordance with the determined first adjusted distribution of force as the vehicle travels the upcoming road section. Thereafter, the method may revert to start as shown in the figure, or alternatively be ended.

In case it is determined in step S103 that the predicted temperature profiles demonstrate that an upper temperature threshold for the at least one subsystem will be reached prior to a respective upper temperature threshold for each of the plurality of power units and/or each of the optional one or more power electronic devices will be reached, the method may proceed to step S107. Step S107 comprises determining a second adjusted distribution of total force between the plurality of power units for the upcoming road section which enables a delay of when a first one of the plurality of power units, the optional one or more power electronic devices and the at least one subsystem is predicted reach its upper temperature threshold.

After the optional step S107, the method may proceed to a step S108 of controlling the plurality of power units in accordance with the determined second adjusted distribution of force as the vehicle travels the upcoming road section. Thereafter, the method may be reverted to start as shown in the figure.

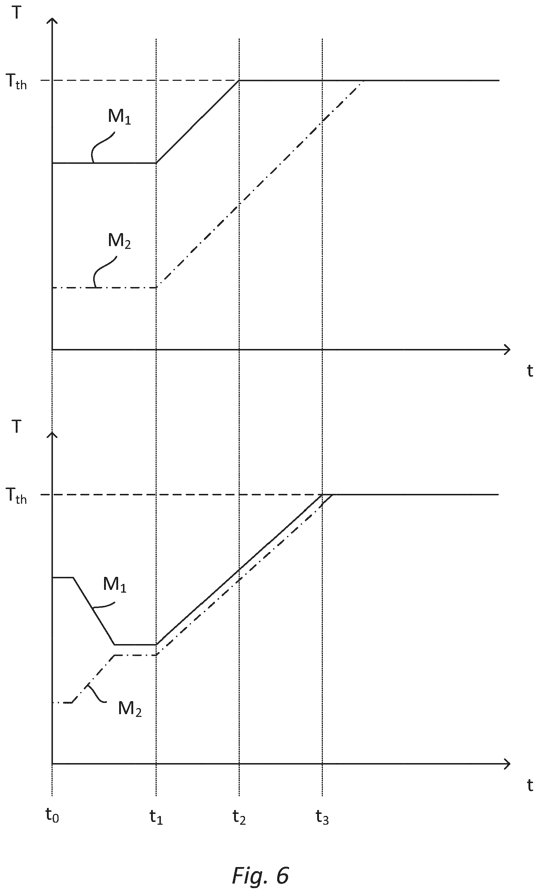

In order to further illustrate the herein described method, Figure 6 shows examples of predicted temperature profiles for two power units M1, M2 of a vehicle for an upcoming road section. In the figure, time t₀ represents the point in time at which the prediction of the temperature profiles are made and thus essentially corresponds to the point in time at which the vehicle would start to travel the upcoming road section. For ease of illustration, the two power units M1 and M2 according to the present example are electrical machines having the same configuration. Furthermore, it is here presumed that the respective upper temperature thresholds for the power units M1 and M2 are identical, said upper temperature threshold being denominated Tₜₕ in the figure. The illustrated example is based on a case where the upper temperature threshold Tₜₕ represents a temperature at which a limitation of the force delivered by the respective power unit M1, M2 to the vehicle would occur. Furthermore, according to the illustrated example, the upcoming road section comprises an uphill, which the vehicle is expected to reach at time t₁. It is also assumed that the uphill requires maximum power utilization of each of the power units M1 and M2 to achieve a desired travelling speed of the vehicle.

According to the current distribution of force between the power units at time t₀, the power unit M1 is exerting a higher force compared to power unit M2. Power unit M1 therefore has a higher operating temperature than M2 at t₀.

The upper part of Figure 6 illustrates predicted temperature profiles for M1 and M2 based on the currently planned distribution of force for the upcoming road section (compare with step S101 shown in Figure 5), i.e. before an adjustment of the force distribution between the power units has been made. As can be seen from the figure, M1 is predicted to reach its upper temperature threshold at an earlier point in time than when M2 reaches its upper temperature threshold. More specifically, M1 is predicted to reach its upper temperature threshold Tₜₕ at t₂. When the power unit M1 reaches its upper temperature threshold Tₜₕ, a limitation of the force provided by said power unit occurs at t₂. Since power unit M2 is already maximally utilized at said point in time, the limitation of force provided by power unit M1 will inherently lead to a reduction of the travelling speed of the vehicle.

The lower part of Figure 6 illustrates predicted temperature profiles for the power units M1 and M2 if the currently planned distribution of force would be adjusted to one example of the first adjusted distribution of force in accordance with the present method. In other words, the predicted temperature profiles shown in the lower part of the figure essentially corresponds to the result which would be achieved if controlling the power units in accordance with the first adjusted distribution of force as the vehicle travels the upcoming road section (compare with step S106 shown in Figure 5). According to the illustrated example, the distribution of force is altered to the first adjusted distribution of force shortly after t₀ and prior to t₁. According to the first adjusted distribution of force, the utilization of power unit M1 is reduced and compensated by an increase in the utilization of the power unit M2 to meet the desired travelling speed of the vehicle. This leads to a reduction of the temperature of power unit M1 during a part of the time interval t₀ and t₁, as well as an increase of the temperature of power unit M2, as shown in the figure. This in turn means that power unit M1 will have a lower temperature at t₁ compared to the case shown in the upper part of Figure 6, and consequently also that it will reach its upper temperature threshold Tₜₕ at a later point in time, i.e. at t₃ compared to at t₂. The power unit M2 will not reach its upper temperature threshold Tₜₕ until shortly thereafter. This means that the reduction of total force provided to the vehicle will be delayed from t₂ to t₃ in case the power units M1 and M2 are controlled according to the first adjusted distribution of force as the vehicle travels the upcoming road section.

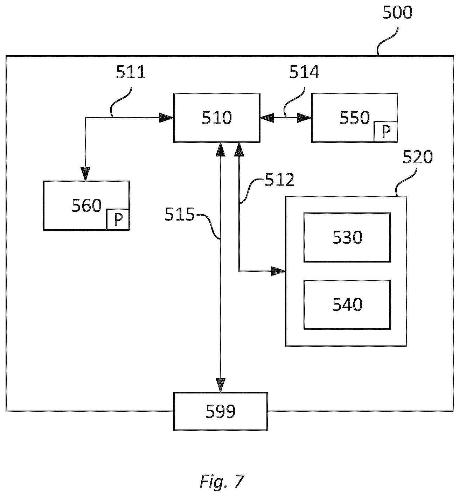

Figure 7 schematically illustrates an exemplifying embodiment of a device 500. The control arrangement 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling distribution of force provided to a vehicle by a plurality of power units of the vehicle to meet a total force demand of the vehicle. The plurality of power units comprises at least one electrical machine. The vehicle may optionally comprise one or more power electronic devices, each of said one or more power electronic devices operatively connected to a respective power unit of the plurality of power units. The computer program comprises instructions for, based on predictive data and a currently planned distribution of force between the plurality of power units for an upcoming road section of the vehicle, predicting a respective temperature profile for the upcoming road section for each power unit, of the plurality of power units, that constitutes an electrical machine and/or each of the optional one or more power electronic devices. The computer program further comprises instructions for, in response to a determination that the predicted temperature profiles demonstrate that a respective upper temperature threshold for one of the plurality of power units and/or one of the optional one or more power electronic devices will be reached, determining a first adjusted distribution of force between the plurality of power units for the upcoming road section which enables a delay of when a first one of the plurality of power units and/or the optional one or more power electronic devices is predicted to reach its upper temperature threshold. Moreover, the computer program comprises instructions for controlling the plurality of power units in accordance with the determined first adjusted distribution of force as the vehicle travels the upcoming road section.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be effected by the device 500 by means of the data processing unit 510 which runs the program stored in the memory 560 or the read/write memory 550. When the device 500 runs the program, methods herein described are executed.

## Claims

1. A method, performed by a control arrangement (100), for controlling distribution of force provided to a vehicle (1) by a plurality of power units of the vehicle (1) to meet a total force demand of the vehicle (1),
said plurality of power units (11, 12, 14, 22, 32) comprising at least one electrical machine,
wherein the vehicle (1) comprises at least two mechanically separated powertrains (20, 30), each of the at least two mechanically separated powertrains (20, 30) comprising at least one power unit of the plurality of power units (11, 12, 14, 22, 32), or
wherein said plurality of power units (11, 12, 14, 22, 32) are comprised in a common powertrain of the vehicle (1),
the vehicle (1) optionally comprising one or more power electronic devices (13, 15), each of said one or more power electronic devices (13, 15) operatively connected to a respective power unit of the plurality of power units,
the method comprising the following steps:
based on predictive data and a currently planned distribution of force between the plurality of power units (11, 12, 14, 22, 32) for an upcoming road section of the vehicle (1), predicting (S101) a respective temperature profile for the upcoming road section for each power unit, of the plurality of power units, that constitutes an electrical machine and/or each of the optional one or more power electronic devices (13, 15);
in response to a determination that the predicted temperature profiles demonstrate that a respective upper temperature threshold for one of the plurality of power units (11, 12, 14, 22, 32) and/or one of the optional one or more power electronic devices (13, 15) will be reached, determining (S105) a first adjusted distribution of force between the plurality of power units (11, 12, 14, 22, 32) for the upcoming road section which enables a delay of when a first one of the plurality of power units (11, 12, 14, 22, 32) and/or the optional one or more power electronic devices (13, 15) is predicted to reach its upper temperature threshold; and
controlling (S106) the plurality of power units (11, 12, 14, 22, 32) in accordance with the determined first adjusted distribution of force as the vehicle (1) travels the upcoming road section.

2. The method according to claim 1, wherein the step of predicting (S101) a respective temperature profile for the upcoming road section comprises predicting a respective temperature profile for the upcoming road section for each power unit of the plurality of power units (11, 12, 14, 22, 32) and optionally each of the optional one or more power electronic devices (13, 15).

3. The method according to any one of claims 1 or 2, wherein the step of determining (S105) a first adjusted distribution of force between the plurality of power units (11, 12, 14, 22, 32) for the upcoming road section comprises determining a first adjusted distribution of force between the plurality of power units (11, 12, 14, 22, 32) which results in that the respective upper temperature thresholds for at least two power units of the plurality of power units (11, 12, 14, 22, 32) are predicted to be reached simultaneously or within a predefined time interval, each power unit of said at least two power units constituting an electrical machine.

4. The method according to any one of the preceding claims, wherein
the vehicle (1) further comprises:
at least one subsystem (21, 31, 40, 42, 44) that has an operating temperature which is dependent on an operating temperature and/or an operating condition of at least one power unit of the plurality of power units; and
wherein the method further comprises:
based on the predictive data and the currently planned distribution of a total force between the plurality of power units (11, 12, 14, 22, 32) for an upcoming road section of the vehicle (1), predicting (S102) a temperature profile for the at least one subsystem (21, 31, 40, 42, 44) for the upcoming road section;
in response to a determination that the predicted temperature profiles demonstrate that an upper temperature threshold for the at least one subsystem (21, 31, 40, 42, 44) will be reached prior to a respective upper temperature threshold for each of the plurality of power units (11, 12, 14, 22, 32) and/or each of the optional one or more power electronic devices (13, 15) will be reached, determining (S107) a second adjusted distribution of total force between the plurality of power units (11, 12, 14, 22, 32) for the upcoming road section which enables a delay of when a first one of the plurality of power units (11, 12, 14, 22, 32), the optional one or more power electronic devices (13, 15) and the at least one subsystem (21, 31, 40, 42, 44) is predicted reach its upper temperature threshold; and
controlling (S108) the plurality of power units (11, 12, 14, 22, 32) in accordance with the determined second adjusted distribution of force as the vehicle (1) travels the upcoming road section.

5. A computer program comprising instructions which, when executed by a computer, cause the computer to carry out the method according to any one of the preceding claims.

6. A computer-readable medium comprising instructions which, when executed by a computer, cause the computer to carry out the method according to any one of claims 1 to 4.

7. A control arrangement (100) configured to control distribution of force provided to a vehicle (1) by a plurality of power units (11, 12, 14, 22, 32) of the vehicle (1) to meet a total force demand of the vehicle (1),
said plurality of power units (11, 12, 14, 22, 32) comprising at least one electrical machine,
wherein the vehicle (1) comprises at least two mechanically separated powertrains, each of the at least two mechanically separated powertrains comprising at least one power unit of the plurality of power units, or
wherein said plurality of power units (11, 12, 14, 22, 32) are comprised in a common powertrain of the vehicle (1),
the vehicle (1) optionally comprising one or more power electronic devices (13, 15), each of said one or more power electronic devices (13, 15) operatively connected to a respective power unit of the plurality of power units,
wherein the control arrangement (100) is configured to:
based on predictive data and a currently planned distribution of force between the plurality of power units (11, 12, 14, 22, 32) for an upcoming road section of the vehicle (1), predict a respective temperature profile for the upcoming road section for each power unit, of the plurality of power units, that constitutes an electrical machine and/or each of the optional one or more power electronic devices (13, 15);
in response to a determination that the predicted temperature profiles demonstrate that a respective upper temperature threshold for one of the plurality of power units (11, 12, 14, 22, 32) and/or one of the optional one or more power electronic devices (13, 15) will be reached, determine a first adjusted distribution of force between the plurality of power units (11, 12, 14, 22, 32) for the upcoming road section which enables a delay of when a first one of the plurality of power units (11, 12, 14, 22, 32) and/or the optional one or more power electronic devices (13, 15) is predicted to reach its upper temperature threshold; and
control the plurality of power units (11, 12, 14, 22, 32) in accordance with the determined first adjusted distribution of force as the vehicle (1) travels the upcoming road section.

8. The control arrangement (100) according to claim 7, wherein the control arrangement (100) is configured to, based on predictive data and a currently planned distribution of force between the plurality of power units (11, 12, 14, 22, 32) for an upcoming road section of the vehicle (1), predict a respective temperature profile for the upcoming road section for each power unit of the plurality of power units (11, 12, 14, 22, 32) that constitutes an electrical machine and optionally each of the optional one or more power electronic devices (13, 15).

9. The control arrangement (100) according to any one of claims 7 or 8, wherein the control arrangement (100) is configured to determine the first adjusted distribution of force between the plurality of power units (11, 12, 14, 22, 32) based on a criterion that the respective upper temperature thresholds for at least two power units of the plurality of power units (11, 12, 14, 22, 32) should be predicted to be reached simultaneously or within a predefined time interval, each of said at least two power units constituting an electrical machine.

10. The control arrangement (100) according to any one of claims 7 to 9, wherein
the vehicle (1) further comprises:
at least one subsystem (21, 31, 40, 42, 44) that has an operating temperature which is dependent on an operating temperature and/or an operating condition of at least one power unit of the plurality of power units; and
wherein the control arrangement (100) further is configured to:
based on the predictive data and the currently planned distribution of a total force between the plurality of power units (11, 12, 14, 22, 32) for an upcoming road section of the vehicle (1), predict a temperature profile for the at least one subsystem (21, 31, 40, 42, 44) for the upcoming road section;
in response to a determination that the predicted temperature profiles demonstrate that an upper temperature threshold for the at least one subsystem (21, 31, 40, 42, 44) will be reached prior to a respective upper temperature threshold for each of the plurality of power units (11, 12, 14, 22, 32) and/or each of the optional one or more power electronic devices (13, 15) will be reached, determine a second adjusted distribution of total force between the plurality of power units (11, 12, 14, 22, 32) for the upcoming road section which enables a delay of when a first one of the plurality of power units, the optional one or more power electronic devices (13, 15) and the at least one subsystem (21, 31, 40, 42, 44) is predicted to reach its upper temperature threshold; and
control the plurality of power units (11, 12, 14, 22, 32) in accordance with the determined second adjusted distribution of force as the vehicle (1) travels the upcoming road section.

11. A cruise control system (200) for a vehicle (1), said cruise control system (200) comprising the control arrangement (100) according to any one of claims 7 to 10.

12. A vehicle (1) comprising:
a plurality of power units (11, 12, 14, 22, 32) comprising at least one electrical machine, and
optionally one or more power electronic devices (13, 15), each of said one or more power electronic devices (13, 15) operatively connected to a respective power unit of the plurality of power units (11, 12, 14, 22, 32),
wherein the vehicle (1) further comprises the control arrangement (100) according to any one of claims 7 to 10.

13. The vehicle (1) according to claim 12, wherein the vehicle (1) comprises at least two mechanically separated powertrains, each of the at least two mechanically separated powertrains comprising at least one power unit of the plurality of power units.

14. The vehicle (1) according to claim 12, wherein said plurality of power units (11, 12, 14, 22, 32) are comprised in a common powertrain of the vehicle (1).

15. The vehicle (1) according to any one of claims 12 to 14, further comprising one or more subsystems (21, 31, 40, 42, 44), each subsystem being either (i) an energy storage system (21, 32) configured to power at least one power unit of the plurality of power units (11, 12, 14, 22, 32), (ii) a temperature regulating circuit (42) configured to regulate operating temperature of at least one fuel cell of the vehicle (1), (iii) a temperature regulating circuit (44) configured to regulate operating temperature of a transmission arrangement of the vehicle (1), or (iv) an exhaust gas aftertreatment system (46).
